# EUROPEAN PATENT APPLICATION

(11) **EP 4 628 876 A1**
(43) Date of publication of application: **08.10.2025**
(21) Application number: 24875773.4
(22) Date of filing: 27.08.2024
(51) Int. Cl.: G01N 21/89, G06T 7/00

(54) **TAB ULTRASONIC WELDING DETECTION SYSTEM AND SPOT CHECK METHOD**

(30) Priority: 22.02.2024 CN 202410197243
(71) Applicant: Contemporary Amperex Technology Co., Limited, Ningde, Fujian 352100 (CN)
(72) Inventor: CHEN, Yupei, Ningde, Fujian 352100 (CN); XU, Deming, Ningde, Fujian 352100 (CN); ZHENG, Nishan, Ningde, Fujian 352100 (CN); HUANG, Shumao, Ningde, Fujian 352100 (CN); HUANG, Wenfang, Ningde, Fujian 352100 (CN)
(74) Representative: Kraus & Lederer PartGmbB
(86) International application number: PCT/CN2024/114857
(87) International publication number: WO 2025/175728

(57) **Abstract**

The present application, belonging to the technical field of batteries, provides a tab ultrasonic welding detection system and a check method. The detection system includes a calibration block, a first camera, a second camera, a first strip-shaped light source, a second strip-shaped light source, and an upper computer. A first film sheet and a second film sheet are attached to surfaces of a first tab profiling body and a second tab profiling body of the calibration block, respectively. The first camera and the second camera are used to capture detected images of the first film sheet and the second film sheet, respectively. Both the first strip-shaped light source and the second strip-shaped light source are configured to simultaneously illuminate the first tab profiling body and the second tab profiling body. The upper computer is configured to determine hardware check results according to the detection images, and is further configured to determine a software check result of a visual detection software within the upper computer according to a preset tab state image. The detection system can solve the problem that reliability of a detection system itself cannot be judged, and facilitate to, to some extent, find an abnormal state in time to avoid production of defective products.

## Description

### CROSS REFERENCE

The present application makes reference to Chinese Patent Application No. 202410197243.2 filed on February 22, 2024 and entitled "Tab Ultrasonic Welding Detection System and Check Method", which is incorporated herein by reference in its entirety.

### TECHNICAL FIELD

The present application relates to the technical field of batteries, and in particular, to a tab ultrasonic welding detection system and a check method.

### BACKGROUND

In a battery production process, a certain defect may occur and needs to be detected by various detection means to increase a yield of a battery. For a process step of ultrasonically welding a battery tab, a tab ultrasonic welding detection system is generally employed in a related technique to detect welding quality of the battery tab, thereby avoiding production of defective products. When the detection system deteriorates in terms of reliability, an adverse effect of producing a large number of defective products may occur. Therefore, the tab ultrasonic welding system needs to have the capability of judging whether its check result is reliable.

### SUMMARY

The present application aims to at least solve one of technical problems occurring under some circumstances. To this end, an object of the present application is to provide a tab ultrasonic welding detection system and a check method, and the detection system can perform check on reliability of the system itself, thereby avoiding that the system operates with low reliability to produce a large number of defective products.

An embodiment of a first aspect of the present application provides a tab ultrasonic welding detection system including a calibration block, a first camera, a second camera, a first strip-shaped light source, a second strip-shaped light source, and an upper computer.

The calibration block includes a first battery profiling body, a second battery profiling body, a first tab profiling body, a second tab profiling body, a first film sheet, and a second film sheet, the first battery profiling body is connected to the second battery profiling body by the first tab profiling body and the second tab profiling body, the first film sheet is attached to a surface of the first tab profiling body, and the second film sheet is attached to a surface of the second tab profiling body.

The first camera and the second camera are arranged along a first direction and located directly above the first tab profiling body and the second tab profiling body, respectively; and the first camera is used to capture a detection image of the first film sheet, and the second camera is used to capture a detection image of the second film sheet.

The first strip-shaped light source and the second strip-shaped light source are respectively located at both sides of the first camera and the second camera along a second direction, the second direction is perpendicular to the first direction, and both the first strip-shaped light source and the second strip-shaped light source are configured to simultaneously illustrate the first tab profiling body and the second tab profiling body.

The upper computer is configured to determine hardware check results of the first camera, the second camera, the first strip-shaped light source, and the second strip-shaped light source according to the detection images captured by the first camera and the second camera; and the upper computer is further configured to determine a software check result of a visual detection software within the upper computer according to a preset tab state image.

In the technical solution of the embodiment of the present application, by configuring the calibration block for the tab ultrasonic welding detection system and providing the upper computer with the capability of determining the hardware check results and software check result, the reliability of the detection system itself can be checked to facilitate to find an abnormal state of the tab ultrasonic welding detection system in time, thereby avoiding that the tab ultrasonic welding detection system operates under a low-reliability state to cause production of a large number of defective products. Since the upper computer is configured to perform check at both a hardware level and a software level, and separately determine hardware check results and a software check result, the hardware or the software of the system can be debugged in a targeted manner to facilitate to shorten the debugging time for the detection system, thereby increasing overall efficiency of a process step of ultrasonically welding a tab to some extent.

In some embodiments, surfaces, facing the first camera and the second camera, respectively, of the first tap profiling body and the second tap profiling body are provided with grooves, respectively, which are used to receive the first film sheet and the second film sheet, so that upper surfaces of the first film sheet and the second film sheet are flush with surfaces of the first tap profiling body and the second tap profiling body, respectively. Thus, after the first film sheet and the second film sheet are respectively attached, the first tab profiling body and the second tab profiling body may simulate an actually flat tap surface, and may also reduce, to some extent, an error caused by a height difference of a film sheet surface and a real tab, thereby facilitating to some extent to ensure consistency between a hardware check result and a result when practical tab welding detection.

In some embodiments, both the first film sheet and the second film sheet include a plurality of rectangular areas, each of the rectangular areas includes a circular color block and an odd-shaped color block surrounding the circular color block, radii of the plurality of circular color blocks are different from each other, and grayscale values of the plurality of odd-shaped color blocks are different from each other. The radii of the plurality of circular color blocks are used to check reliability of size identification of the tab ultrasonic welding detection system, and the grayscale values of the plurality of odd-shaped color blocks are used to check reliability of grayscale value identification of the tab ultrasonic welding detection system. Thus, since two odd-shaped color blocks with different grayscale values and two circular color blocks with different radii are at least present, on one hand, different grayscale values and radii can be provided for detection and identification by the tab ultrasonic welding detection system, so that a false detection risk occurring with a single detection object is reduced to have a fool-proofing inspection effect, and on the other hand, the detection capability and detection accuracy of the tab ultrasonic welding detection system can be inspected in different ways by identifying a difference of different grayscale values in a detection image and comparing the difference with a difference of corresponding grayscale values on the film sheet, or by identifying a difference of different radii in the detection image and comparing the difference with a difference of corresponding radii on the film sheet, thereby increasing reliability of a hardware check result of the tab ultrasonic welding detection system.

In some embodiments, the grayscale values of the odd-shaped color blocks gradually increase or gradually decrease along a first preset path sequentially passing through each rectangular area; and a minimum radius of the plurality of circular color blocks is greater than or equal to a minimum detection size of the first camera and the second camera, and the radii of the circular color blocks increase or decrease by an integer multiple of the minimum detection size along a second preset path sequentially passing through each of the rectangular areas. Therefore, by the above two preset paths, the grayscale values of the odd-shaped color blocks and the radii of the circular color blocks both increase or decrease along the paths, so that when check, the tab ultrasonic welding detection system can determine whether obtained grayscale values and radii satisfy a preset change rule by comparison, and a calculation amount during comparison can be reduced to some extent, thereby increase check efficiency to some extent.

In some embodiments, the upper computer is configured to determine check decision parameters according to the detection images, and determine the hardware check results according to the check decision parameters, wherein the check decision parameters comprise detection values of the grayscale values of the odd-shaped color blocks and detection values of the radii of the circular color blocks in the detection image. Thus, the upper computer has the capability of identifying two types of check decision parameters, detection values of grayscale values and detection values of radii in a detection image of a film sheet, establishes a corresponding relation of a preset value and a detection value in a plurality of rectangular areas, and thus can check reliability of grayscale value identification and size identification of a tab ultrasonic welding detection system.

In some embodiments, the upper computer is further configured to determine a tab defect detection result according to a preset tab state image, and determine a software check result according to the tab defect detection result and the preset defect result corresponding to the preset tab state image. Thus, by identifying a tab state image having a preset defect, a software check result of the upper computer can be determined according to the tab defect detection result and the preset defect result.

In some embodiments, the tab ultrasonic welding detection system further comprises a lower computer and a jaw. The upper computer is further configured to send the hardware check results to a manufacturing execution system, the upper computer sends the hardware check results to the lower computer in response to the hardware check results being passed, and the lower computer controls the jaw to remove the calibration block. Thus, the hardware check results are sent to the manufacturing execution system, and the manufacturing execution system acquires the hardware check results of the tab ultrasonic welding detection system, so that an operator can acquire the reliability state of the tab ultrasonic welding detection system in real time in the manufacturing execution system. When the hardware check results are passed, the lower computer controls the jaw to remove the calibration block from the tab ultrasonic welding detection system, facilitating to increase a degree of automation of a check flow and production efficiency.

An embodiment of a second aspect of the present application provides a check method for a tab ultrasonic welding detection system, and the check method is performed in the tab ultrasonic welding detection system provided in the first aspect of the present application. The check method includes acquiring detection images of the first film sheet and the second film sheet; determining check decision parameters according to the detection images; determining hardware check results of the first camera, the second camera, the first strip-shaped light source, and the second strip-shaped light source according to the check decision parameters; acquiring a preset tab state image including at least one image in which a tab has a set defect and/or a defect-free-tab image; determining a defect detection result according to the preset tab state image; and determining a software check result of a visual detection software within the upper computer according to the defect detection result. Thus, by configuring the calibration block for the tab ultrasonic welding detection system and providing the upper computer with the capability of determining the hardware check results and software check result, the reliability of the detection system itself can be checked to facilitate to find an abnormal state of the tab ultrasonic welding detection system in time, thereby avoiding that the tab ultrasonic welding detection system operates under a low-reliability state to cause production of a large number of defective products. Since the upper computer is configured to perform check at both a hardware level and a software level, and determine hardware check results and a software check result, the hardware or the software of the apparatus can be debugged in a targeted manner to facilitate to shorten the debugging time for the detection system, thereby increasing overall efficiency of a process step of ultrasonically welding a tab to some extent.

In some embodiments, both the first film sheet and the second film sheet include a plurality of rectangular areas, each of the rectangular areas includes a circular color block and an odd-shaped color block surrounding the circular color block, radii of the plurality of circular color blocks are different from each other, and grayscale values of the plurality of odd-shaped color blocks are different from each other. And wherein the check decision parameter comprises detection values of the grayscale values of the odd-shaped color blocks and detection values of the radii of the circular color blocks in the detection image. Thus, since two odd-shaped color blocks with different grayscale values and two circular color blocks with different radii are at least present, on one hand, different grayscale values and radii can be provided for detection and identification by the tab ultrasonic welding detection system, so that a false detection risk occurring with a single detection object is reduced to have a fool-proofing inspection effect, and on the other hand, the detection capability and detection accuracy of the tab ultrasonic welding detection system can be inspected in different ways by identifying a difference of different grayscale values in an image and comparing the difference with a difference of corresponding grayscale values on the film sheet, or by identifying a difference of different radii in the image and comparing the difference with a difference of corresponding radii on the film sheet, thereby increasing reliability of a hardware check result of the tab ultrasonic welding detection system.

In some embodiments, determining the hardware check results of the first camera, the second camera, the first strip-shaped light source, and the second strip-shaped light source according to the check decision parameters includes comparing the check decision parameters with corresponding preset characteristic parameters, wherein the preset characteristic parameters include grayscale values of the odd-shaped color blocks and radii of the circular color blocks; and in response to that a difference of the check decision parameters and the corresponding preset characteristic parameters exceeds a preset range, determining the hardware check results being not passed. Thus, by setting a preset range and according to whether a difference of the check decision parameters and the corresponding preset characteristic parameters exceeds the preset range, automatic inspection can be realized for the tab ultrasonic welding detection system, and the hardware check results of the tab ultrasonic welding detection system can be relatively accurately decided, thereby increasing check efficiency to some extent.

In some embodiments, determining the hardware check results of the first camera, the second camera, the first strip-shaped light source, and the second strip-shaped light source according to the check decision parameters further includes: in response to that deviation of a difference of detection values of grayscale values of any two of the odd-shaped color blocks and a difference of grayscale values in corresponding preset characteristic parameters exceeds a grayscale threshold range, determining the hardware check results being not passed. Thus, by setting a grayscale threshold range, it may be more accurately to judge whether the grayscale value identification capability of the tab ultrasonic welding detection system is normal.

In some embodiments, determining the hardware check results of the first camera, the second camera, the first strip-shaped light source, and the second strip-shaped light source according to the check decision parameters further includes: in response to that deviation of a detection value of a radius of any one of the circular color blocks and a radius in corresponding preset characteristic parameters exceeds a size threshold range, determining the hardware check results being not passed. Thus, by setting the size threshold range, it may be more accurately to judge whether the size identification capability of the tab ultrasonic welding detection system is normal.

In some embodiments, determining a software check result of a visual detection software within the upper computer according to the defect detection result includes: comparing the defect detection result with a preset defect result corresponding to the preset tab state image, and in response to that the defect detection result is inconsistent with the preset defect result, determining the software check result of the visual detection software within the upper computer being not passed. Thus, by identifying a tab state image having a preset defect, the software check result of the upper computer can be determined according to a tab defect detection result and a preset defect result, to increase all-round performance and accuracy of check of the tab ultrasonic welding detection system.

In some embodiments, the first camera, the second camera, the first strip-shaped light source, and the second strip-shaped light source are adjusted in response to the hardware check results being not passed; and/or software debugging is performed on the upper computer of the tab ultrasonic welding detection system in response to the software detection result being not passed. Thus, an overhaul can be performed for the tab ultrasonic welding detection system, facilitating to increase production efficiency.

In some embodiments, the tab ultrasonic welding detection system further includes a lower computer and a jaw, and the check method further includes sending the hardware check results to a manufacturing execution system; and sending the hardware check results to the lower computer in response to the hardware check results being passed, and removing the calibration block by controlling the jaw by the lower computer. Thus, the hardware check results are sent to the manufacturing execution system, and the manufacturing execution system acquires a reliability state of the tab ultrasonic welding detection system, so that an operator can acquire hardware reliability of the tab ultrasonic welding detection system in real time in the manufacturing execution system. When the hardware check results are passed, the lower computer controls the jaw to remove the calibration block from the tab ultrasonic welding detection system, facilitating to increase an automation degree of a check flow and production efficiency.

The above description is merely an overview of the technical solutions of the present application. For a clearer understanding of the technical means of the present application, the present application can be carried out in accordance with the content of the description, and in order to make the above and other objectives, characteristics, and advantages of the present application apparent and comprehensible, specific embodiments of the present application are described below.

### DESCRIPTION OF DRAWINGS

In the drawings, the same reference sign represents the same or similar components or elements throughout a plurality of drawings unless otherwise specified. The drawings are not necessarily drawn to scale. It should be understood that these drawings depict only some embodiments disclosed in accordance with the present application and are not to be considered as limiting the scope of the present application.
FIG. 1 is a schematic view of a tab ultrasonic welding detection system of some embodiments of the present application;
FIG. 2 is a schematic view of a calibration block of some embodiments of the present application;
FIG. 3 is a schematic view of a first film sheet of some embodiments of the present application;
FIG. 4 is a schematic view of a first film sheet of other embodiments of the present application;
FIG. 5 is a schematic flow chart of a check method for a tab ultrasonic welding detection system of some embodiments of the present application; and

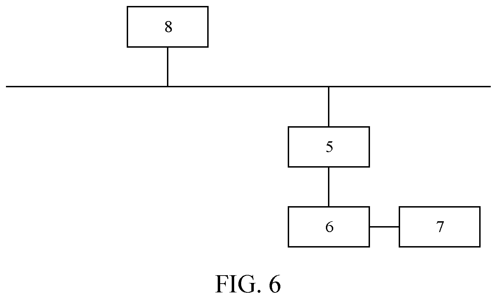

FIG. 6 is a schematic view of a connection relation of an upper computer, a manufacturing execution system, and a lower computer of some embodiments of the present application.

Description of reference signs:
a tab ultrasonic welding detection system 1; a calibration block 2; a first battery profiling body 21; a second battery profiling body 22; a first tab profiling body 23; a second tab profiling body 24; a groove 25; a first camera 31; a second camera 32; a first strip-shaped light source 41; a second strip-shaped light source 42; an upper computer 5; a lower computer 6; a jaw 7; and a manufacturing execution system (MES) 8;
a first film sheet 101; and a second film sheet 102;
a rectangular area 10; a first rectangular area 11; a second rectangular area 12; a third rectangular area 13; and a fourth rectangular area 14;
a circular color block 120; a first circular color block 121; a second circular color block 122; a third circular color block 123; and a fourth circular color block 124;
an odd-shaped color block 110; a first odd-shaped color block 111; a second odd-shaped color block 112; a third odd-shaped color block 113; a fourth odd-shaped color block 114; and a cut corner 130; and
a first direction D1, a second direction D2, a first preset path P1, and a second preset path P2.

### DESCRIPTION OF EMBODIMENTS

Embodiments of the technical solutions of the present application are described in detail below with reference to the drawings. The following embodiments are only used to more clearly illustrate the technical solutions of the present application, and thus are used as examples only, and are not intended to limit the protection range of the present application.

Unless defined otherwise, all technical and scientific terms used herein have the same meaning as commonly understood by a person skilled in the art to which the present application belongs; the terms used herein are used for describing particular embodiments only and are not intended to limit the present application; and the terms "comprising", "including", and "having" and any variations thereof in the description, claims and the above drawings of the present application are intended to cover non-exclusive inclusion.

In the description of the embodiments of the present application, the technical terms "first", "second", and the like are used only for distinguishing between different objects, but cannot be construed to indicate or imply relative importance or implicitly indicate the number, specific order, or primary/secondary relationship of indicated technical features. In the description of the embodiments of the present application, "a plurality of" means two or more unless specifically defined otherwise.

Reference to "an embodiment" herein means that a particular feature, structure, or characteristic described with reference to the embodiment can be included in at least one embodiment of the present application. The phrase in various places in the description does not necessarily all refer to the same embodiment, or a separate or alternative embodiment mutually exclusive of other embodiments. It is explicitly and implicitly understood by a person skilled in the art that the embodiments described herein may be combined with other embodiments.

In the description of the embodiments of the present application, the term "and/or" merely describes an association relationship of associated objects, indicating that three relationships may exist, for example, A and/or B may mean that A exists alone, A and B exist simultaneously, or B exists alone. In addition, the character "/" herein generally indicates that associated objects are in a "or" relationship.

In the description of the embodiments of the present application, the term "a plurality of" means two or more (including two), and similarly, the term "a plurality of groups" means two or more groups (including two groups), and the term "a plurality of pieces" means two or more pieces (including two pieces).

In the description of the embodiments of the present application, orientations or positional relationships indicated by the technical terms such as "center", "longitudinal", "transverse", "length", "width", "thickness", "upper", "lower", "front", "rear", "left", "right", "vertical", "horizontal", "top", "bottom", "inner", "outer", "clockwise", "counter-clockwise", "axial", "radial", "circumferential", and the like are based on orientations or positional relationships shown in the drawings, and are merely for convenience of description of the embodiments of the present application and simplified description, and do not indicate or imply that an indicated apparatus or element must have a specific orientation or be configured and operated in a specific orientation, and thus should not be construed as limitations on the embodiments of the present application.

In the description of the embodiments of the present application, unless explicitly specified and defined otherwise, the terms "mount", "couple", "connect", and "fasten" should be broadly understood, for example, they may be a fixed connection, a detachable connection, or an integral connection; or may be a mechanical connection, or an electrical connection; or may be a direct connection, or an indirect connection via an intermediate medium, or an internal communication between two elements or interaction between two elements. A person of ordinary skill in the art may understand the specific meanings of the above terms in the embodiments of the present application according to specific situations.

In a battery production process, a certain defect may occur and needs to be detected by various detection means to increase a yield of a battery. In a related technique, a tab ultrasonic welding detection system is used to detect quality in a battery production process, and the tab ultrasonic welding detection system needs to be calibrated when initial installation, to enable its detection accuracy to satisfy detection requirements. In some cases, the reliability of the tab ultrasonic welding detection system may change with a change in production conditions or equipment variation, and the reliability of the tab ultrasonic welding detection system needs to be checked to prevent a failure of the tab ultrasonic welding detection system to cause production of defective products. In some embodiments, in a process step of ultrasonic tab welding, a tab ultrasonic welding detection system is used to detect defects in a tab area, but there is no check on reliability of the tab ultrasonic welding detection system itself.

To this end, an embodiment of the present application provides a tab ultrasonic welding detection system that can perform check on its own reliability. The system includes a calibration block, a first camera, a second camera, a first strip-shaped light source, a second strip-shaped light source, and an upper computer. The calibration block includes a first battery profiling body, a second battery profiling body, a first tab profiling body, a second tab profiling body, a first film sheet, and a second film sheet, the first battery profiling body is connected to the second battery profiling body by the first tab profiling body and the second tab profiling body, the first film sheet is attached to a surface of the first tab profiling body, and the second film sheet is attached to a surface of the second tab profiling body. The upper computer determines the hardware check results of the tab ultrasonic welding detection system by detection images of the first film sheet and the second film sheet respectively acquired by the first camera and second camera, and determines a software check result of a visual detection software within the upper computer according to a preset tab state image.

When the tab ultrasonic welding detection system is checked, the grayscale value identification capability of the system can be inspected by acquiring and comparing detection values of grayscale values of odd-shaped color blocks of each rectangular area in a detection image, and the size identification capability of the system can be inspected by acquiring and comparing detection values of radii of circular color blocks of each rectangular area in a detection image, so that the hardware check results of the tab ultrasonic welding detection system can be determined based on a comparison result. Further, a detection result of a preset image is obtained by detecting the preset image having a set defect, so as to determine the software check result of the visual detection software within the upper computer.

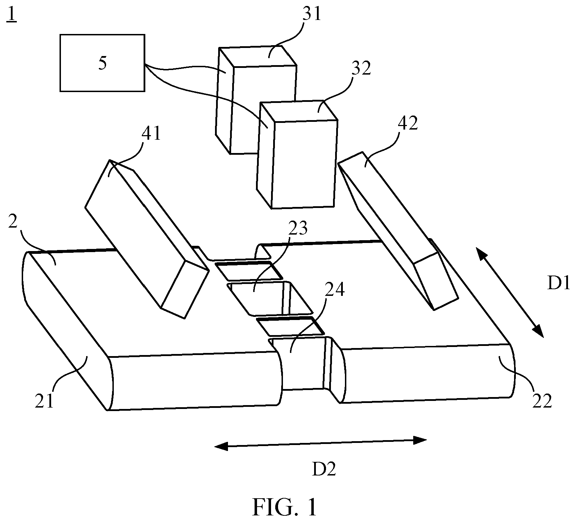

FIG. 1 is a schematic view of a tab ultrasonic welding detection system of some embodiments of the present application.

As shown in FIG. 1, the tab ultrasonic welding detection system 1 includes a calibration block 2, a first camera 31, a second camera 32, a first strip-shaped light source 41, a second strip-shaped light source 42, and an upper computer 5.

The calibration block 2 includes a first battery profiling body 21, a second battery profiling body 22, a first tab profiling body 23, a second tab profiling body 24, a first film sheet 101, and a second film sheet 102. The first battery profiling body 21 is connected to the second battery profiling body 22 by the first tab profiling body 23 and the second tab profiling body 24, the first film sheet 101 is attached to a surface of the first tab profiling body 23, and the second film sheet 102 is attached to a surface of the second tab profiling body 24.

The first camera 31 and the second camera 32 are arranged along a first direction D1 and located directly above the first tab profiling body 23 and the second tab profiling body 24, respectively; and the first camera 31 is used to capture a detection image of the first film sheet 101, and the second camera 32 is used to capture a detection image of the second film sheet 102; and
the first strip-shaped light source 41 and the second strip-shaped light source 42 are respectively located on both sides of the first camera 31 and the second camera 32 along a second direction D2, the second direction D2 is perpendicular to the first direction D1, and both the first strip-shaped light source 41 and the second strip-shaped light source 42 are configured to simultaneously illuminate the first tab profiling body 23 and the second tab profiling body 24.

The upper computer 5 is configured to determine hardware check results of the first camera 31, the second camera 32, the first strip-shaped light source 41, and the second strip-shaped light source 42 according to the detection images captured by the first camera 31 and the second camera 32. The upper computer 5 is further configured to determine a software check result of a visual detection software within the upper computer 5 according to a preset tab state image.

As shown in FIG. 1, the external dimension of the calibration block 2 may be designed following a size of a counterpart cell to be detected. Specifically, following a structure in which cells are mated to finish tab welding, the calibration block 2 includes the first battery profiling body 21, the second battery profiling body 22, the first tab profiling body 23, and a second tab profiling body 24. After the first film sheet 101 and second film sheet 102 are attached to surfaces of the first tab profiling body 23 and the second tab profiling body 24, respectively, the object detected in practice by the tab ultrasonic welding detection system 1 can be better simulated, so that the detection image acquired when check can be consistent to a detection image when actual detection as much as possible, thereby increasing an accuracy degree of a check result.

The first camera 31 and the second camera 32 are imaging units for acquiring detection images of the first film sheet 101 and the second film sheet 102, respectively. The first camera 31 and the second camera 32 are arranged at intervals along the first direction D1 and located directly above the first tab profiling body 23 and the second tab profiling body 24, respectively. In some examples, the first camera 31 and the second camera 32 may be CCD cameras, and thus can provide high-definition detection images.
the first strip-shaped light source 41 and the second strip-shaped light source 42 have a function to provide light to both the first tab profiling body 23 and the second tab profiling body 24 to facilitate imaging by the first camera 31 and the second camera 32. The first strip-shaped light source 41 and the second strip-shaped light source 42 are located on both sides of the first camera 31 and the second camera 32, respectively, in the second direction D2, and extend along the first direction D1. The first strip-shaped light source 41 and the second strip-shaped light source 42 are opposed to each other, and oppositely illuminate the first tab profiling body 23 and the second tab profiling body 24 in an obliquely downward manner.

The upper computer 5 may be at least signal-connected to the first camera 31 and the second camera 32, and may be provided with a visual detection software for identifying and processing the detection images captured by the first camera 31 and the second camera 32, to identify a site and a type of a defect in a detected image to reduce the risk of producing defective cells. It can be understood that, when the operating state of the camera or the light source changes, the detected image received by the upper computer 5 may correspondingly change, for example, a change in relevant parameters (such as a grayscale value, a pixel size, etc.) in the detected image, relatively large deviation may be caused for the result of identifying the detected image by the upper computer 5, thereby affecting reliability of tab ultrasonic welding detection.

The upper computer 5 may also be configured to determine the hardware check results of the first camera 31, the second camera 32, the first strip-shaped light source 41, and the second strip-shaped light source 42 according to the detection images captured by the first camera 31 and the second camera 32. The upper computer 5 may have a visual detection software installed therein, and the upper computer 5 is further configured to determine a software check result of the visual detection software within the upper computer 5 according to a preset tab state image.

Thus, by configuring the calibration block 2 for the tab ultrasonic welding detection system 1 and providing the upper computer 5 with the capability of determining the hardware check results and software check result, the reliability of the detection system itself can be checked to facilitate to find an abnormal state of the tab ultrasonic welding detection system 1 in time, thereby avoiding that the tab ultrasonic welding detection system 1 operates under a low-reliability state to cause production of a large number of defective products. Since the upper computer 5 is configured to perform check at both a hardware level and a software level, and separately determine hardware check results and a software check result, the hardware or the software of the system can be debugged in a targeted manner to facilitate to shorten the debugging time for the detection system, thereby increasing overall efficiency of a process step of ultrasonically welding a tab to some extent.

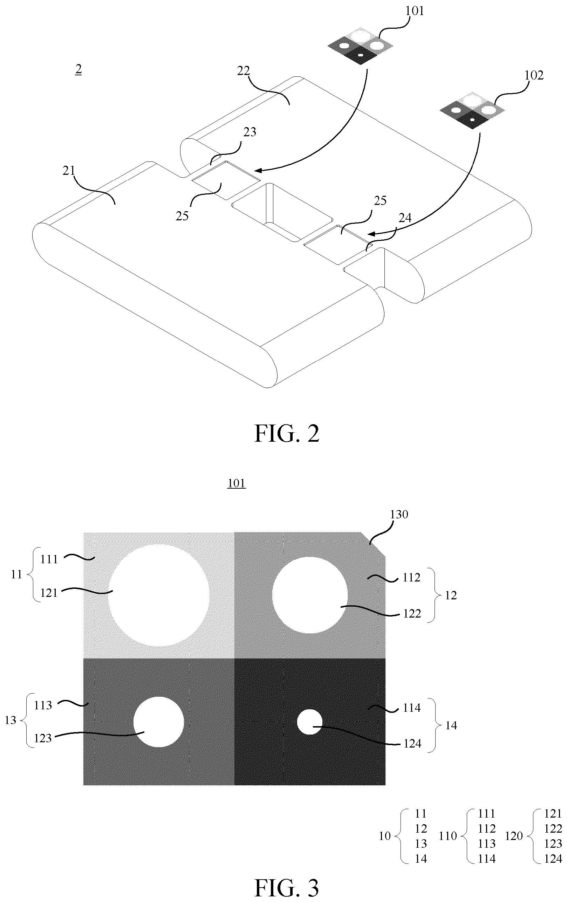

FIG. 2 is a schematic view of a calibration block 2 of some embodiments of the present application.

As shown in FIGS. 1 and 2, surfaces, facing the first camera 31 and the second camera 32, respectively, of the first tab profiling body 23 and the second tab profiling body 24 are respectively provided with grooves 25 for receiving the first film sheet 101 and second film sheet 102, so that upper surfaces of the first film sheet 101 and second film sheet 102 are flush with surfaces of the first tab profiling body 23 and the second tab profiling body 24, respectively.

The grooves 25 are formed by recessing the first tab profiling body 23 and the second tab profiling body 24 from their surfaces, the recess depths of the grooves 25 may be identical to the thicknesses of the first film sheet 101 and second film sheet 102, and the projection sizes of the grooves 25 may be equal to that of the first film sheet 101 and second film sheet 102.

Thus, after the first film sheet 101 and the second film sheet 102 are respectively attached, the first tab profiling body 23 and the second tab profiling body 24 may simulate an actually flat tap surface, and may also reduce, to some extent, an error caused by a height difference of a film sheet surface and a real tab, thereby facilitating to some extent to ensure consistency between a hardware check result and a result when practical tab welding detection.

FIG. 3 is a schematic view of a first film sheet 101 of some embodiments of the present application.

As shown in FIG. 3, the first film sheet 101 includes a plurality of rectangular areas 10, each of the rectangular areas 10 includes a circular color block 120 and an odd-shaped color block 110 surrounding the circular color block 120, the radii of the plurality of circular color blocks 120 are different from each other, and the grayscale values of the plurality of odd-shaped color blocks 110 are different from each other.

As shown in FIG. 3, the first film sheet 101 may include four rectangular areas 10, which are a first rectangular area 11, a second rectangular area 12, a third rectangular area 13, and a fourth rectangular area 14, and each of the rectangular areas 10 may include an odd-shaped color block 110 and a circular color block 120. In each rectangular area 10, the circular color block 120 is located inside the odd-shaped color block 110, and the grayscale value of the circular color block 120 is different from that of the odd-shaped color block 110 so as to facilitate identification and distinguishing.

In some embodiments, the rectangular areas 10 in the first film sheet 101 are all gray-scale patterns, and thus, the detection image acquired by the tab ultrasonic welding detection system 1 when check is also a gray-scale image, thereby facilitating to determine a grayscale value of a corresponding area. The grayscale values of the odd-shaped color block 110 and circular color block 120 may range from 0 to 255, wherein 255 is for white and 0 is for black. Detection of a grayscale value may be realized by a hardware detection method or a non-hardware detection method. For example, a target area of a film sheet may be directly measured by installing a sensor or other apparatus to obtain a grayscale value of a corresponding area.

The number of the rectangular areas 10 is not particularly limited in the present application. However, it can be understood that a larger number of the rectangular areas 10 means the surface of the first film sheet 101 being discretized into more inspection areas, and the more inspection areas which can be subjected to comparison by the tab ultrasonic welding detection system (specific comparison objects are a grayscale value of an odd-shaped color block 110 and a radius of a circular color block 120), so that the check result of the tab ultrasonic welding detection system 1 has a higher degree of accuracy. In some embodiments, when the number of the rectangular areas 10 of the first film sheet 101 are determined, a specific setting may be made for the number according to a degree of check accuracy, thereby increasing an accuracy degree of a check result.

In the plurality of odd-shaped color blocks 110, at least two odd-shaped color blocks 110 have grayscale values different from each other, so that it is possible to inspect whether the distinguishing capability of the tab ultrasonic welding detection system 1 for different grayscale values is normal. In some embodiments, the grayscale values of the plurality of odd-shaped color blocks 110 are different. As shown in FIG. 3, each odd-shaped color block 114 in the four rectangular areas 10 of the first film sheet 101 has a different grayscale value, wherein a first odd-shaped color block 110 in the first rectangular area 11 has a grayscale value of 220, a second odd-shaped color block 112 in the second rectangular area 12 has a grayscale value of 160, a third odd-shaped color block 113 in the third rectangular area 13 has a grayscale value of 100, and a fourth odd-shaped color block 111 in the fourth rectangular area 14 has a grayscale value of 40.

In the plurality of circular color blocks 120, at least two circular color blocks 120 have radii different from each other, so that it is possible to inspect whether the identification capability of the tab ultrasonic welding detection system 1 for different lengths is normal. In some embodiments, the radius values of the plurality of circular color blocks 120 are different. As shown in FIG. 3, each circular color block 121 in the four rectangular areas 10 of the first film sheet 101 has a different grayscale value, wherein a first circular color block 120 in the first rectangular area 11 has a radius of 2.0 mm, a second circular color block 122 in the second rectangular area 12 has a radius of 1.5 mm, a third circular color block 123 in the third rectangular area 13 has a radius of 1.0 mm, and a fourth circular color block 124 in the fourth rectangular area 14 has a radius of 0.5 mm.

It should be noted that a method for setting the second film sheet 102 may be identical to that for the first film sheet 101, and thus the method for setting the second film sheet 102 is not described for brevity in the present application.

Thus, since two odd-shaped color blocks 110 with different grayscale values and two circular color blocks 120 with different radii are at least present, on one hand, different grayscale values and radii can be provided for detection and identification by the tab ultrasonic welding detection system 1, so that a false detection risk occurring with a single detection object is reduced to have a fool-proofing inspection effect, and on the other hand, the detection capability and detection accuracy of the tab ultrasonic welding detection system 1 can be inspected in different ways by identifying a difference of different grayscale values in a detection image and comparing the difference with a difference of corresponding grayscale values on the film sheet, or by identifying a difference of different radii in the detection image and comparing the difference with a difference of corresponding radii on the film sheet, thereby increasing reliability of a hardware check result of the tab ultrasonic welding detection system 1.

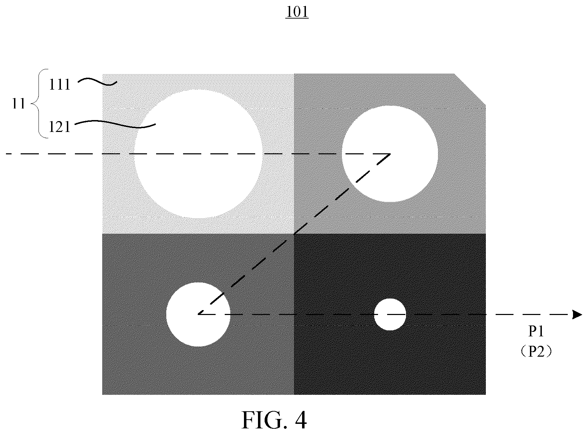

FIG. 4 is a schematic view of a first film sheet 101 of other embodiments of the present application.

As shown in FIG. 4, grayscale values of the odd-shaped color blocks 110 gradually increase along a first preset path P1 sequentially passing through each rectangular area 10; and a minimum radius of the plurality of circular color blocks 120 is greater than or equal to a minimum detection size of the first camera 31 and the second camera 32, and the radii of the circular color blocks 120 decrease by an integer multiple of the minimum detection size along a second preset path P2 sequentially passing through each rectangular area 10.

The first preset path P1 may be an arbitrary path which is preset and sequentially passes through each rectangular area 10, and along the first preset path P1, grayscale values of a plurality of odd-shaped color blocks 110 corresponding to a plurality of rectangular areas 10 change regularly, for example, gradually increase or gradually decrease.

Referring to FIG. 4, in some embodiments, on the first film sheet 101, the first preset path P1 may be defined, along which grayscale values of a plurality of odd-shaped color blocks gradually increase or gradually decrease. Thus, the tab ultrasonic welding detection system 1 may sequentially acquire grayscale values of odd-shaped color blocks 110 in each rectangular area 10 along the first preset path P1, and when grayscale values of two front-and-rear odd-shaped color blocks 110 acquired by the detection system 1 along the first preset path P1 do not satisfy a preset change rule, it may be considered that the reliability of the tab ultrasonic welding detection system 1 is insufficient, with no need to continuously detect or compare grayscale values of subsequent odd-shaped color blocks along the first preset path P1. In this way, a calculation amount of the tab ultrasonic welding detection system 1 can be reduced to some extent when check, thereby increasing check efficiency to some extent.

In some embodiments, the grayscale values of the plurality of odd-shaped color blocks 110 may change in an equal-difference manner along the first preset path P1, and under the equal-difference manner, the grayscale values of the odd-shaped color blocks 110 are uniformly distributed in a given grayscale value interval, detection is more comprehensive, and the problem of insufficient reliability of the tab ultrasonic welding detection system 1 in certain possible grayscale value intervals may be avoided to some extent due to failed identification, thereby increasing the accuracy of the reliability inspection to some extent.

Similarly, with continued reference to FIG. 4, on the first tessellated sheet 101, a second preset path P2 may be defined, along which the radii of the plurality of circular color blocks 120 gradually decrease. Thus, the tab ultrasonic welding detection system 1 may sequentially acquire radii of circular color blocks 120 in each rectangular area 10 along the second preset path P2, and when radii of two front-and-rear circular color blocks 120 acquired by the tab ultrasonic welding detection system 1 along the second preset path P2 does not satisfy a preset change rule, it may be considered that the reliability of the tab ultrasonic welding detection system 1 is insufficient, with no need to continuously detect or compare radii of subsequent circular color blocks 120 along the second preset path P2. In this way, a calculation amount of the tab ultrasonic welding detection system 1 can be reduced to some extent when check, thereby increasing check efficiency to some extent.

It can be understood that, since the resolution of the first camera 31 and the second camera 32 is limited, if a radius on the first film sheet 101 is smaller than a minimum detection size of the first camera 31 and the second camera 32, the radius cannot be accurately represented in an captured detection image, which is also disadvantageous for subsequent image identification. Therefore, with reference to the minimum detection size of the first camera 31 and the second camera 32 in the tab ultrasonic welding detection system 1, the radii of the plurality of circular color blocks 120 on the first film sheet 101 may be set to be greater than or equal to the minimum detection size, thereby ensuring that an obtained detection image can be used to judge whether the size identification capability of the tab ultrasonic welding detection system 1 satisfies reliability requirements.

Thus, by the above two preset paths, the grayscale values of the odd-shaped color blocks 110 and the radii of the circular color blocks 120 both increase or decrease along the paths, so that when check, the tab ultrasonic welding detection system 1 can determine whether obtained grayscale values and radii satisfy a preset change rule by comparison, and a calculation amount during comparison can be reduced to some extent, thereby increase check efficiency to some extent.

According to some embodiments of the present application, the upper computer 5 may also be configured to determine check decision parameters according to the detection images, and determine the hardware check results according to the check decision parameters. In which, the check decision parameters include detection values of the grayscale values of the odd-shaped color blocks 110 and detection values of the radii of the circular color blocks 120 in the detection image.

After the detection images of the first film sheet 101 and second film sheet 102 are acquired, and according to the detection images, the check decision parameters may be specifically determined as detection values of grayscale values of a plurality of odd-shaped color blocks 110 and detection values of radii of a plurality of circular color blocks 120, a corresponding relation of preset values and detection values is established in the plurality of rectangular areas 10, and check of the tab ultrasonic welding detection system 1 can be performed in the plurality of rectangular areas 10.

Thus, the upper computer 5 has the capability of identifying two types of check decision parameters, detection values of grayscale values and detection values of radii in a detection image of a film sheet, establishes a corresponding relation of a preset value and a detection value in a plurality of rectangular areas 10, and thus can check reliability of grayscale value identification and size identification of the tab ultrasonic welding detection system 1.

According to some embodiments of the present application, the upper computer 5 may be further configured to determine a tab defect detection result according to a preset tab state image, and determine a software check result according to the tab defect detection result and the preset defect result corresponding to the preset tab state image.

The preset tab state image may be an image in an image library stored in advance in a storage apparatus which may be a memory of the upper computer 5 or a memory in a cloud. The preset tab state image may include an image in which a tab has a set defect, the image indicating that a cell tab in the image has specific one or more defect types, and/or a defect-free-tab image, an image in which a cell tab has no defects. Each preset tab state image has been identified in advance and a corresponding preset result is stored. In some embodiments, acquiring a preset tab state image may be randomly extracting any one or more preset images in the image library, or a manner to traverse each preset image in the image library for subsequent defect detection.

A visual detection software is provided within the upper computer 5, and by the visual detection software, the preset tab state image is detected, so that the defect detection result of the image can be determined, and according to the defect detection result, a software check result of the visual detection software within the upper computer 5 can be determined.

Thus, by identifying a tab state image having a preset defect, a software check result of the upper computer 5 can be determined according to the tab defect detection result and the preset defect detection result.

According to some embodiments of the present application, the tab ultrasonic welding detection system 1 further includes a lower computer 6 and a jaw 7, the upper computer 5 is further configured to send the hardware check results to a manufacturing execution system (MES) 8, and in response to the hardware check results being passed, the upper computer 5 sends the hardware check results to the lower computer 6, and the lower computer 6 controls the jaw 7 to remove the calibration block 2.

The manufacturing execution system (MES) 8 is a management information system, which is located between an upper-level planning management system and a lower-layer production apparatus and is directed to a shop floor layer, and can increase production efficiency and benefit of a factory workshop. By collecting and analyzing production data in real time, the system optimizes a production flow, reduces a production cost, and increase product quality. The main functions of the manufacturing execution system (MES) 8 may include production scheduling, quality management, apparatus management, material management, etc.

In some embodiments, the tab ultrasonic welding detection system 1 is electrically connected to the manufacturing execution system (MES) 8, and the tab ultrasonic welding detection system 1 can communicate with the manufacturing execution system (MES) 8 in real time. When the hardware check of the tab ultrasonic welding detection system 1 is completed, the upper computer 5 sends the hardware check results to the manufacturing execution system (MES) 8, and an operator can know the reliability state of the system in the manufacturing execution system (MES) 8. In a state where the hardware check results are passed, the upper computer 5 sends the hardware check results to the lower computer 6, and the lower computer 6 may control the jaw 7 to remove the calibration block 2, so that an ultrasonically welded cell product may be disposed for detection under the first camera 31 and the second camera 32. The aforementioned jaw 7 may be a manipulator of an automatic loading-and-unloading apparatus, and may remove the calibration block 2 from the tab ultrasonic welding detection system 1 in response to an instruction of the lower computer 6.

Thus, the hardware check results are sent to the manufacturing execution system, and the manufacturing execution system acquires the hardware check results of the tab ultrasonic welding detection system 1, so that an operator can acquire the reliability state of the tab ultrasonic welding detection system 1 in real time in the manufacturing execution system. When the hardware check results are passed, the upper computer 5 sends the hardware check results to the lower computer 6, and the lower computer 6 controls the jaw 7 to remove the calibration block from the tab ultrasonic welding detection system 1, facilitating to increase an automation degree of a detection process and production efficiency.

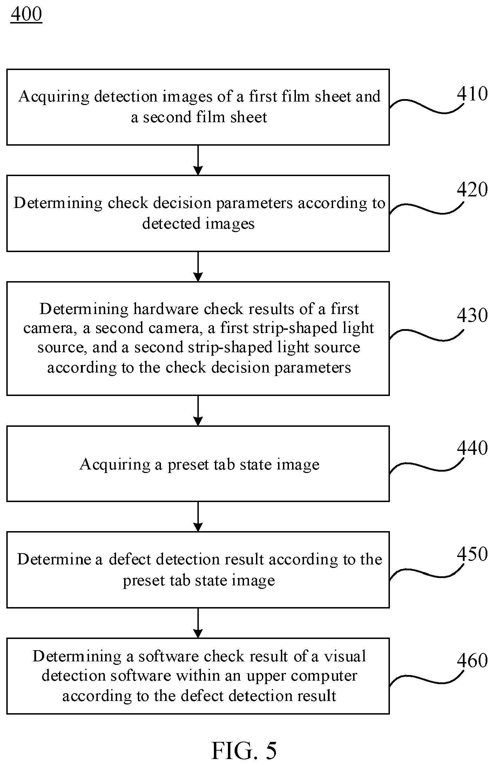

FIG. 5 is a schematic flow chart of a check method 400 for a tab ultrasonic welding detection system of some embodiments of the present application.

As shown in FIG. 5, an embodiment of a second aspect of the present application provides a check method 400 for a tab ultrasonic welding detection system, including:
step 410: acquiring detection images of the first film sheet 101 and the second film sheet 102;
step 420: determining check decision parameters according to the detected images;
step 430: determining the hardware check results of the first camera 31, the second camera 32, the first strip-shaped light source 41, and the second strip-shaped light source 42 according to the check decision parameters;
step 440: acquiring a preset tab state image including at least one image in which a tab has a set defect and/or a defect-free-tab image;
step 450: determining a defect detection result according to the preset tab state image; and
step 460: determining a software check result of a visual detection software within the upper computer 5 according to the defect detection result.

In step 410, the calibration block 2 is disposed below the first camera 31 and the second camera 32, the first film sheet 101 and second film sheet 102 are aligned with the first camera 31 and the second camera 32, respectively, and then detection images of the first film sheet 101 and second film sheet 102 are acquired by the first camera 31 and the second camera 32, respectively. The shooting environment and parameter when the images are acquired can be consistent with that when detection in practice, thereby increasing an accuracy degree of check.

In step 420, the acquired detection images are provided to the upper computer 5 in which respective image identification softwares or programs may be preset, and the upper computer 5 identities the detection images to determine check decision parameters. The check decision parameters may include a grayscale value of an odd-shaped color block 110 corresponding to a rectangular area, and may further include a radius of a circular color block 120 corresponding to the rectangular area.

In step 430, gray scales of odd-shaped color blocks 110 and radii of circular color blocks 120 corresponding to individual rectangular areas preset for the first film sheet 101 and the second film sheet 102 may be input to and stored in the upper computer 5, and may be input in advance according to the first film sheet 101 and second film sheet 102 that are used in practice. The grayscale values in the check decision parameters are compared with preset grayscale values corresponding thereto, the radii in the check decision parameter are compared with radii corresponding thereto, and the hardware check results of the first camera 31, the second camera 32, the first strip-shaped light source 41 and the second strip-shaped light source 42 can be determined.

In step 440, the preset tab state image may be an image in an image library stored in advance in a storage apparatus which may be a memory of the upper computer 5 or a memory in a cloud. The preset tab state image may include an image in which a tab has a set defect, the image indicating that a cell tab in the image has specific one or more defect types, and/or a defect-free-tab image, an image in which a cell tab has no defects. Each preset tab state image has been identified in advance and a corresponding preset result is stored. In some embodiments, acquiring a preset tab state image may be randomly extracting any one or more preset images in the image library, or a manner to traverse each preset image in the image library for subsequent defect detection.

In step 450 to step 460, a visual detection software is provided within the upper computer 5, and by the visual detection software, the preset tab state image is detected, so that the defect detection result of the image can be determined, and according to the defect detection result, a software check result of the visual detection software within the upper computer 5 can be determined.

Thus, by configuring the calibration block for the tab ultrasonic welding detection system 1 and providing the upper computer with 5 the capability of determining the hardware check results and software check result, the reliability of the detection system itself can be checked to facilitate to find an abnormal state of the tab ultrasonic welding detection system 1 in time, thereby avoiding that the tab ultrasonic welding detection system 1 operates under a low-reliability state to cause production of a large number of defective products. Since the upper computer 5 is configured to perform check at both a hardware level and a software level, and determine hardware check results and a software check result, the hardware or the software of the apparatus can be debugged in a targeted manner to facilitate to shorten the debugging time for the detection system, thereby increasing overall efficiency of a process step of ultrasonically welding a tab to some extent.

According to some embodiments of the present application, both the first film sheet 101, and the second film sheet 102 include a plurality of rectangular areas 10, each of the rectangular areas 10 includes a circular color block 120 and an odd-shaped color block 110 surrounding the circular color block 120, radii of the plurality of circular color blocks 120 are different from each other, and grayscale values of the plurality of odd-shaped color blocks 110 are different from each other. And in which, the check decision parameters include detection values of grayscale values of the odd-shaped color blocks 110 and detection values of radii of the circular color blocks 120 in the detection image.

As shown in FIG. 3, the first film sheet 101 may include four rectangular areas 10, which are a first rectangular area 11, a second rectangular area 12, a third rectangular area 13, and a fourth rectangular area 14, and each of the rectangular areas 10 may include an odd-shaped color block 110 and a circular color block 120. In each rectangular area 10, the circular color block 120 is located inside the odd-shaped color block 110, and the grayscale value of the circular color block 120 is different from that of the odd-shaped color block 110 so as to facilitate identification and distinguishing.

The detection images of the first film sheet 101 and second film sheet 102 as described above are acquired, and according to the detection images, the check decision parameters may be specifically determined as detection values of grayscale values of odd-shaped color blocks 110 and detection values of radii of circular color blocks 120, and in this way, a corresponding relation of preset values and detection values is established in the plurality of rectangular areas 10, and check of the tab ultrasonic welding detection system 1 can be performed in the plurality of rectangular areas 10.

Thus, since two odd-shaped color blocks 110 with different grayscale values and two circular color blocks 120 with different radii are at least present, on one hand, different grayscale values and radii can be provided for detection and identification by the tab ultrasonic welding detection system 1, so that a false detection risk occurring with a single detection object is reduced to have a fool-proofing inspection effect, and on the other hand, the detection capability and detection accuracy of the tab ultrasonic welding detection system can be inspected in different ways by identifying a difference of different grayscale values in an image and comparing the difference with a difference of corresponding grayscale values on the film sheet, or by identifying a difference of different radii in the image and comparing the difference with a difference of corresponding radii on the film sheet, thereby increasing reliability of a hardware check result of the tab ultrasonic welding detection system.

According to some embodiments of the present application, determining the hardware check results of the first camera 31, the second camera 32, the first strip-shaped light source 41, and the second strip-shaped light source 42 according to the check decision parameters includes:
comparing the check decision parameters with corresponding preset characteristic parameters, wherein the preset characteristic parameters include grayscale values of the odd-shaped color blocks 110 and radii of the circular color block 120; and
in response to that a difference of the check decision parameters and the corresponding preset characteristic parameters exceeds a preset range, determining the hardware check results being not passed.

The preset range may include a grayscale threshold range and a length threshold range, both the grayscale threshold range and length threshold range are threshold ranges which are determined according to the identification capability of the tab ultrasonic welding detection system and a defect type of a detection target, and are used for measuring reliability of grayscale value identification and size identification of the tab ultrasonic welding detection system.

After the images of the first film sheet 101 and the second film sheet 102 are acquired, from an accuracy degree for identifying grayscale values by the tab ultrasonic welding detection system 1, its reliability can be judged, or from an accuracy degree for identifying a size by the tab ultrasonic welding detection system 1, its reliability can also be judged.

For example, in some embodiments, an image grayscale value of an odd-shaped color block 110 of any one rectangular area 10 in the preset characteristic parameters may be compared with a grayscale value of a corresponding odd-shaped color block 110 in check decision parameters to calculate whether difference ΔT1 of the two values exceeds a preset grayscale threshold range. For example, the grayscale threshold range may be from -5 to 5, if calculated difference ΔT1 satisfies -5≤ΔT1≤5, it is decided that the grayscale value identification capability of the tab ultrasonic welding detection system 1 satisfies requirements, with good reliability, and it can be considered that the hardware check results are passed. If not, it is decided that the grayscale value identification capability of the tab ultrasonic welding detection system does not satisfy requirements, with poor reliability, and it can be considered that the hardware check results are not passed.

Thus, by setting a preset range and according to whether a difference of check decision parameters and the corresponding preset characteristic parameters exceeds the preset range, automatic inspection can be realized for the tab ultrasonic welding detection system 1, and the hardware check results of the tab ultrasonic welding detection system 1 can be relatively accurately decided, thereby increasing check efficiency to some extent.

According to some embodiments of the present application, determining the hardware check results of the first camera 31, the second camera 32, the first strip-shaped light source 41, and the second strip-shaped light source 42 according to the check decision parameters further includes:
in response to that deviation of a difference of detection values of grayscale values of any two of the odd-shaped color blocks 110 and a difference of grayscale values in corresponding preset characteristic parameters exceeds a grayscale threshold range, determining the hardware check results being not passed.

In some embodiments, a difference of image grayscale values of any two odd-shaped color blocks 110 in the preset characteristic parameters may be compared with a difference of two corresponding grayscale values in the check decision parameters to calculate whether difference ΔT2 of the two values exceeds a preset grayscale threshold range, that is, whether -5≤ΔT2≤5 is satisfied. If so, it is decided that the grayscale value identification capability of the tab ultrasonic welding detection system 1 satisfies requirements, with good reliability, and it can be considered that the hardware check results are passed. If not, it is decided that the grayscale value identification capability of the tab ultrasonic welding detection system 1 does not satisfy requirements, with poor reliability, and it can be considered that the hardware check results are not passed.

Thus, by setting a grayscale threshold range, it may be more accurately to judge whether the grayscale value identification capability of the tab ultrasonic welding detection system 1 is normal.

According to some embodiments of the present application, determining the hardware check results of the first camera 31, the second camera 32, the first strip-shaped light source 41, and the second strip-shaped light source 42 according to the check decision parameters further includes:
in response to that deviation of a detection value of a radius of any one of the circular color blocks 120 and a radius in the corresponding preset characteristic parameters exceeds a size threshold range, determining the hardware check results being not passed.

In some embodiments, the size threshold range may be determined according to the size tolerance of the circular color blocks 120 in the first film sheet 101 or second film sheet 102. For example, the tolerance of the radii of the circular color blocks 120 in the first film sheet 101 is Ø, and the size threshold range may be less than or equal to Ø/10, Ø/5, Ø/3, or Ø/2, and may be specifically determined according to a detection accuracy requirement of a camera. Calculation of a difference of an image radius of any one of the circular color blocks 120 in the image characteristic parameters and a corresponding radius value in the preset characteristic parameters may be made to calculate whether difference ΔT3 of the two exceeds a preset size threshold range, that is, whether ΔT3≦Ø/10 is satisfied. If so, it is decided that the size identification ability of the tab ultrasonic welding detection system satisfies requirements, with good reliability, and it can be considered that the hardware check results are passed. If not, it is decided that the size identification capability of the tab ultrasonic welding detection system does not satisfy requirements, with poor reliability, and it can be considered that the hardware check results are not passed.

Thus, by setting the size threshold range, it may be more accurately to judge whether the size identification capability of the tab ultrasonic welding detection system is normal.

According to some embodiments of the present application, determining the software check result of the visual detection software within the upper computer 15 according to the defect detection result includes: comparing the defect detection result with the preset defect result corresponding to the preset tab state image, and in response to that the defect detection result is inconsistent with the preset defect result, determining the software check result of the visual detection software within the upper computer being not passed.

In some embodiments, if the defect detection result of the preset tab state image is consistent with the preset result, it is indicated that the visual detection software of the tab ultrasonic welding detection system 1 operates normally, the software check result of the tab ultrasonic welding detection system 1 being passed. If not consistent, it is indicated that the visual detection software of the tab ultrasonic welding detection system 1 may have an algorithm variation or an algorithm failure, so that the software check result of the tab ultrasonic welding detection system 1 is not passed; and that the tab ultrasonic welding detection system 1 needs to be debugged, with check performed again after the debugging is completed until the software check result is passed.

Thus, by identifying a tab state image having a preset defect, the software check result of the upper computer 5 can be determined according to the tab defect detection result and the preset defect result, to increase all-round performance and accuracy of check of the tab ultrasonic welding detection system 1.

According to some embodiments of the present application, the first camera 31, the second camera 32, the first strip-shaped light source41, and the second strip-shaped light source 42 are adjusted in response to the hardware check results being not passed; and/or software debugging is performed on the upper computer 5 of the tab ultrasonic welding detection system 1 in response to the software detection result being not passed.

Thus, an overhaul can be performed for the tab ultrasonic welding detection system 1, facilitating to increase production efficiency.

According to some embodiments of the present application, the hardware check results are sent to the manufacturing execution system, and in response to the hardware check results being passed, the hardware check results are sent to the lower computer 6, and the lower computer 6 controls the jaw 7 to remove the calibration block 2.

Thus, the hardware check results are sent to the manufacturing execution system, and the manufacturing execution system acquires a reliability state of the tab ultrasonic welding detection system 1, so that an operator can acquire hardware reliability of the tab ultrasonic welding detection system 1 in real time in the manufacturing execution system. When the hardware check results are passed, the hardware check results are sent to the lower computer 6, and the lower computer 6 controls the jaw 7 to remove the calibration block from the tab ultrasonic welding detection system 1, facilitating to increase an automation degree of a check flow and production efficiency.

The technical solution of the present application is further illustrated below by some specific embodiments.

As shown in FIGS. 1 to 3, the first film sheet 101 may include four rectangular areas 10, which are a first rectangular area 11, a second rectangular area 12, a third rectangular area 13, and a fourth rectangular area 14, respectively, each of the rectangular areas 10 includes an odd-shaped color block 110 and a circular color block 120, and in each rectangular area 10, the circular color block 120 is located inside the odd-shaped color block 110, and the grayscale value of the circular color block 120 is different from that of the odd-shaped color block 110. It should be noted that the second film sheet 102 may be identical to the first film sheet 101, so the second film sheet 102 is not be described for brevity herein.

The first rectangular area 11, the second rectangular area 12, the third rectangular area 13, and the fourth rectangular area 14 are arranged in a 2×2 array, and along the "Z"-shape first preset path, grayscale values of odd-shaped color blocks 110 in the four rectangular areas are 220, 160, 100, and 40, respectively.

The circular color blocks 120 in the four rectangular areas 10 are white circular patterns (with a grayscale value of 255), and along the "Z"-shape second preset path, radii of the circular color blocks 120 in the four rectangular areas are 2.0 mm, 1.5 mm, 1.0 mm, and 0.5 mm, respectively. It should be noted that the embodiment only shows a case where the first preset path P1 and the second preset path P2 are identical. In some embodiments, the first preset path P1 and the second preset path P2 may also be different, which is not described herein again for brevity.

Also, to distinguish a front direction and a back direction of the first film sheet 101, a cut corner 130 is provided at one corner of the first film sheet 101.

The calibration block 2 includes a first battery profiling body 21, a second battery profiling body 22, a first tab profiling body 23, a second tab profiling body 24, a first film sheet 101, and a second film sheet 102. The first battery profiling body 21 is connected to the second battery profiling body 22 by the first tab profiling body 23 and the second tab profiling body 24, the first film sheet 101 is attached to a surface of the first tab profiling body 23, and the second film sheet 102 is attached to a surface of the second tab profiling body 24.

The first camera 31 and the second camera 32 are arranged along a first direction D1 and located directly above the first tab profiling body 23 and the second tab profiling body 24, respectively; and the first camera 31 is used to capture a detection image of the first film sheet 101, and the second camera 32 is used to capture a detection image of the second film sheet 102; and
the first strip-shaped light source 41 and second strip-shaped light source 42 are respectively located on both sides of the first camera 31 and the second camera 32 along the second direction D2, the second direction D2 is perpendicular to the first direction D1, and both the first strip-shaped light source 41 and second strip-shaped light source 42 are configured to simultaneously illuminate the first tab profiling body 23 and the second tab profiling body 24.

The upper computer 5 is configured to determine the hardware check results of the first camera 31, the second camera 32, the first strip-shaped light source 41, and the second strip-shaped light source 42 according to the detection images captured by the first camera 31 and the second camera 32; and the upper computer 5 is further configured to determine the software check result of the visual detection software within the upper computer 5 according to the preset tab state image.

As shown in FIG. 4, a check method 400 for a tab ultrasonic welding detection system includes:
step 410: acquiring detection images of the first film sheet 101 and the second film sheet 102;
step 420: determining check decision parameters according to the detected images; and
step 430: determining the hardware check results of the first camera 31, the second camera 32, the first strip-shaped light source 41, and the second strip-shaped light source 42 according to the check decision parameters;
in step 430, check decision parameters are compared with corresponding preset characteristic parameters, wherein the preset characteristic parameters include a grayscale value of the odd-shaped color block 110 and a radius of the circular color block 120; and in response to a difference of the check decision parameters and the corresponding preset characteristic parameters exceeds a preset range, it is determined that the hardware check results are not passed.

The preset range described above may include a grayscale threshold range and a length threshold range, both the grayscale threshold range and length threshold range are threshold ranges which are determined according to the identification capability of the tab ultrasonic welding detection system 1 and a defect type of a detection target, and are used for measuring reliability of grayscale value identification and size identification of the tab ultrasonic welding detection system 1.

For detection of grayscale identification capability, a difference of image grayscale values of any two odd-shaped color blocks 110 in the preset characteristic parameters is compared with a difference of corresponding two grayscale values in the check decision parameters, to calculate whether difference ΔT2 of the two exceeds a preset grayscale threshold range, that is, whether -5≦ΔT2≦5 is satisfied. If so, it is decided that the grayscale value identification capability of the tab ultrasonic welding detection system satisfies requirements.

For detection of size identification capability, the size threshold range may be determined according to the size tolerance of the circular color blocks 120 in the first film sheet 101 or second film sheet 102. In some embodiments, the tolerance of the radii of the circular color blocks 120 in the first film sheet 101 is Ø, and the size threshold range may be less than or equal to Ø/10, that is, the image radius of any circular color block 120 in the image characteristic parameters may be compared with the corresponding radius value in the preset characteristic parameters, and it is calculated whether the difference ΔT3 of the two exceeds the preset size threshold range, that is, whether ΔT3≦Ø/10 is satisfied. If so, it is decided that the size identification capability of the tab ultrasonic welding detection system 1 satisfies requirements.

When it is decided that the size identification capability satisfies requirements and the grayscale value identification capability satisfies requirements, it can be considered that the hardware check results are passed.

Step 440 is to acquire a preset tab state image including at least one image in which a tab has a set defect and/or a defect-free-tab image.

Step 450 is to determine a defect detection result according to the preset tab state image.

Step 460 is determine a software check result of a visual detection software within the upper computer 5 according to the defect detection result.

In step 460, if the defect detection result of the preset tab state image is consistent with the preset result, it is indicated that the visual detection software of the tab ultrasonic welding detection system 1 operates normally, the software check result of the tab ultrasonic welding detection system 1 being passed. If not consistent, it is indicated that the visual detection software of the tab ultrasonic welding detection system 1 may have an algorithm variation or an algorithm failure, so that the software check result of the tab ultrasonic welding detection system 1 is not passed; and that the tab ultrasonic welding detection system 1 needs to be debugged, with check performed again after the debugging is completed until the software check result is passed.

Thus, steps 410 to 430 are to check the hardware reliability of the tab ultrasonic welding detection system 1, and steps 440 to 460 are to check the software reliability of the tab ultrasonic welding detection system 1. After check of the tab ultrasonic welding detection system 1 is completed by the steps described above, it can be confirmed that the reliability of the tab ultrasonic welding detection system 1 satisfies production requirements.

Finally, it should be noted that the above embodiments are only for the purpose of illustrating the technical solutions of the present application and are not to be construed as limiting the present application. Although the present application has been described in detail with reference to the above embodiments, it should be understood by a person of ordinary skill in the art that modifications may be made to the technical solutions described in the above embodiments, or equivalent replacement may be made to some or all of the technical features thereof. However, the modifications or replacements do not make the nature of corresponding technical solutions depart from the scope of the technical solutions of the embodiments of the present application, all of which shall fall within the scope of the claims and the description of the present application. In particular, the technical features mentioned in the embodiments may be combined in any manner provided that there is no structural conflict. The present application is not limited to the specific embodiments disclosed herein, but includes all technical solutions falling within the scope of the claims.

## Claims

1. A tab ultrasonic welding detection system, comprising:
a calibration block comprising a first battery profiling body, a second battery profiling body, a first tab profiling body, a second tab profiling body, a first film sheet, and a second film sheet, the first battery profiling body being connected to the second battery profiling body by the first tab profiling body and the second tab profiling body, the first film sheet being attached to a surface of the first tab profiling body, and the second film sheet being attached to a surface of the second tab profiling body;
a first camera and a second camera arranged along a first direction and located directly above the first tab profiling body and the second tab profiling body, respectively; and the first camera being used to capture a detection image of the first film sheet, and the second camera being used to capture a detection image of the second film sheet;
a first strip-shaped light source and a second strip-shaped light source, the first strip-shaped light source and the second strip-shaped light source being respectively located at both sides of the first camera and the second camera along a second direction, the second direction being perpendicular to the first direction, and both the first strip-shaped light source and the second strip-shaped light source being configured to simultaneously illustrate the first tab profiling body and the second tab profiling body; and
an upper computer configured to determine hardware check results of the first camera, the second camera, the first strip-shaped light source, and the second strip-shaped light source according to the detection images captured by the first camera and the second camera; and the upper computer being further configured to determine a software check result ofa visual detection softwarewithin the upper computer according to a preset tab state image.

2. The tab ultrasonic welding detection system according to claim 1, wherein surfaces, facing the first camera and the second camera, respectively, of the first tap profiling body and the second tap profiling body are provided with grooves, respectively, which are used to receive the first film sheet and the second film sheet, so that upper surfaces of the first film sheet and the second film sheet are flush with surfaces of the first tap profiling body and the second tap profiling body, respectively.

3. The tab ultrasonic welding detection system according to claim 1 or 2, wherein both the first film sheet and the second film sheet comprise a plurality of rectangular areas, each of the rectangular areas comprises a circular color block and an odd-shaped color block surrounding the circular color block, and in each of the rectangular areas, the circular color block and the odd-shaped color block surrounding the circular color block have different grayscale values.

4. The tab ultrasonic welding detection system according to claim 3, wherein the plurality of circular color blocks have radii that are different from each other, and the plurality of odd-shaped color blocks have grayscale values that are different from each other.

5. The tab ultrasonic welding detection system according to claim 4, wherein the grayscale values of the odd-shaped color blocks gradually increase or gradually decrease along a first preset path sequentially passing through each of the rectangular areas.

6. The tab ultrasonic welding detection system according to claim 5, wherein a minimum radius of the plurality of circular color blocks is greater than or equal to a minimum detection size of the first camera and the second camera, and the radii of the circular color blocks increase or decrease by an integer multiple of the minimum detection size along a second preset path sequentially passing through each of the rectangular areas.

7. The tab ultrasonic welding detection system according to claim 5 or 6, wherein the grayscale values of the odd-shaped color blocks gradually increase or gradually decrease in an equal-difference manner along the first preset path.

8. The tab ultrasonic welding detection system according to any one of claims 3 to 7, wherein the grayscale value of the plurality of circular color blocks is 255.

9. The tab ultrasonic welding detection system according to any one of claims 3 to 8, wherein the first film sheet and/or the second film sheet comprise a cut corner for distinguishing forward directions and backward directions of the first film sheet and/or the second film sheet.

10. The tab ultrasonic welding detection system according to any one of claims 3 to 9, wherein
the upper computer is configured to determine check decision parameters according to the detection image, and
to determine the hardware check results according to the check decision parameters;
wherein the check decision parameters comprise detection values of the grayscale values of the odd-shaped color blocks and detection values of the radii of the circular color blocks in the detection image.

11. The tab ultrasonic welding detection system according to any one of claims 1 to 10, wherein
the upper computer is further configured to determine a tab defect detection result according to the preset tab state image, and
to determine the software check result according to the tab defect detection result and a preset defect result corresponding to the preset tab state image.

12. The tab ultrasonic welding detection system according to any one of claims 1 to 11, wherein
the tab ultrasonic welding detection system further comprises a lower computer and a jaw, the upper computer is further configured to send the hardware check results to a manufacturing execution system, the upper computer sends the hardware check results to the lower computer in response to the hardware check results being passed, and the lower computer controls the jaw to remove the calibration block.

13. A check method for a tab ultrasonic welding detection system, the check method being performed in the tab ultrasonic welding detection system according to any one of claims 1 to 12, the check method comprising:
acquiring detection images of the first film sheet and the second film sheet;
determining check decision parameters according to the detection images;
determining hardware check results of the first camera, the second camera, the first strip-shaped light source, and the second strip-shaped light source according to the check decision parameters;
acquiring a preset tab state image comprising at least one image in which a tab has a set defect and/or a defect-free-tab image;
Determining a defect detection result according to the preset tab state image; and
determining a software check result of a visual detection software within the upper computer according to the defect detection result.

14. The check method for a tab ultrasonic welding detection system according to claim 13, wherein both the first film sheet and the second film sheet comprise a plurality of rectangular areas, each of the rectangular areas comprises a circular color block and an odd-shaped color block surrounding the circular color block, radii of the plurality of circular color blocks are different from each other, and grayscale values of the plurality of odd-shaped color blocks are different from each other;
and wherein the check decision parameters comprise detection values of the grayscale values of the odd-shaped color blocks and detection values of the radii of the circular color blocks in the detection image.

15. The check method for a tab ultrasonic welding detection system according to claim 14, wherein determining the hardware check results of the first camera, the second camera, the first strip-shaped light source, and the second strip-shaped light source according to the check decision parameters comprises:
comparing the check decision parameters with corresponding preset characteristic parameters, wherein the preset characteristic parameters comprise grayscale values of the odd-shaped color blocks and radii of the circular color blocks; and
in response to that a difference of the check decision parameters and the corresponding preset characteristic parameters exceeds a preset range, determining the hardware check results being not passed.

16. The check method for a tab ultrasonic welding detection system according to claim 15, wherein determining the hardware check results of the first camera, the second camera, the first strip-shaped light source, and the second strip-shaped light source according to the check decision parameters further comprises:
in response to that deviation of a difference of detection values of grayscale values of any two of the odd-shaped color blocks and a difference of grayscale values in the corresponding preset characteristic parameters exceeds a grayscale threshold range, determining the hardware check results being not passed.

17. The check method for a tab ultrasonic welding detection system according to claim 15 or 16, wherein determining the hardware check results of the first camera, the second camera, the first strip-shaped light source, and the second strip-shaped light source according to the check decision parameters further comprises:
in response to that deviation of a detection value of a radius of any one of the circular color blocks and a radius in the corresponding preset characteristic parameters exceeds a size threshold range, determining the hardware check results being not passed.

18. The check method for a tab ultrasonic welding detection system according to any one of claims 14 to 17, wherein determining a software check result of a visual detection software within the upper computer according to the defect detection result comprises:
comparing the defect detection result with a preset defect result corresponding to the preset tab state image, and
in response to that the defect detection result is inconsistent with the preset defect result, determining the software check result of the visual detection software within the upper computer being not passed.

19. The check method for a tab ultrasonic welding detection system according to any one of claims 14 to 18, further comprising:
adjusting the first camera, the second camera, the first strip-shaped light source, and the second strip-shaped light source in response to the hardware check results being not passed; and/or
performing software debugging on the upper computer of the tab ultrasonic welding detection system in response to the software detection result being not passed.

20. The check method for a tab ultrasonic welding detection system according to any one of claims 14 to 19, wherein the tab ultrasonic welding detection system further comprises a lower computer and a jaw, and the check method further comprises:
sending the hardware check results to a manufacturing execution system; and
in response to the hardware check results being passed, sending the hardware check results to the lower computer, and removing the calibration block by controlling the jaw by the lower computer.
